# EUROPEAN PATENT SPECIFICATION

(11) **EP 3 079 531 B1**
(45) Date of publication and mention of the grant of the patent: **06.02.2019**
(21) Application number: 14805612.0
(22) Date of filing: 02.12.2014
(51) Int. Cl.: A47J 31/36

(54) **BEVERAGE MACHINE WITH A PIVOTABLE CAPSULE GATE**
GETRÄNKEMASCHINE MIT EINER SCHWENKBAREN KAPSELSCHRANKE
MACHINE DE BOISSONS AVEC GRILLE DE CAPSULE PIVOTANTE

(30) Priority: 11.12.2013 EP 13196594
(43) Date of publication of application: 19.10.2016
(73) Proprietor: Nestec S.A., 1800 Vevey (CH)
(72) Inventor: BONACCI, Enzo, CH-1073 Savigny (CH); FLICK, Jean-Marc, CH-1405 Pomy (CH)
(74) Representative: Sacroug, Olivier
(86) International application number: PCT/EP2014/076211
(87) International publication number: WO 2015/086371

(56) References cited:
- WO-A1-2012/072766
- WO-A1-2012/093108
- WO-A1-2012/123440

## Description

### Field of the Invention

The field of the invention relates to machines having a device for handling capsules, such as capsules of an ingredient of a beverage to be prepared with the machine, the capsule being supplied to the capsule handling device via an opening that is associated with a member for opening or closing the opening.

For the purpose of the present description, a "capsule" is meant to include any pre-portioned content, such as a beverage ingredient, e.g. a flavouring ingredient, within an enclosing packaging of any material, in particular an airtight packaging, e.g. plastic, aluminium, recyclable and/or biodegradable packagings, and of any shape and structure, including soft pods or rigid cartridges containing the content. A "beverage" is meant to include any human-consumable liquid substance, such as tea, coffee, hot or cold chocolate, milk, soup, baby food, etc...

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

An example of a machine for preparing a beverage from a flavouring concentrate that is contained in a reservoir and that is mixed with a liquid from another reservoir is disclosed in US 2003/0200871.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule.

The actuation of the movable part of the brewing device may be motorized. Such a system is for example disclosed in EP 1 767 129. In this case, the user does not have to provide any manual effort to open or close the brewing device. The brewing device has a capsule insertion passage provided with a safety door assembled to the movable part of the brewing device via a switch for detecting an undesired presence of a finger in the passage during closure and prevent injuries by squeezing. Further motorized brewing devices are disclosed in WO 2012/025258, WO 2012/025259, WO 2012/093108 and in PCT/EP12/073324.

The actuation of the movable part of the brewing device may be manual. WO 2009/043630 discloses a beverage preparation machine including a brewing unit having a front part with a passage having a mouth for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing. A pivotable arched handle is configured for driving the front part manually. In another embodiment, the telescoping front part is helicoidally movable about an axis perpendicular to the capsule insertion passage and parallel to the passage's mouth, the mouth of the passage being delimited by the telescoping front part and sliding with the front part under the machine's outermost housing by which it is covered in the closed position and uncovered in the open position.

WO 2005/004683 and WO 2007/135136 disclose a device comprising a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle is in the form of a lever that is manually pivotable about an end thereof adjacent the machine's housing. In the closed position, the handle may be pivoted down against the machine's housing and over the capsule inlet passage to cover it. In the open position, the handle is pivoted up away from the capsule inlet passage to uncover this passage. Hence, in addition to moving the holding part, the handle serves to cover and uncover the passage for the capsule. The manual force required to move the movable parts varies during closure and opening of the machine and depends on the dimensional tolerances of the capsules used, the positioning of the capsule and the temperature of the brewing unit. Further covers for covering and uncovering such a passage for the capsule are disclosed in WO 2012/093107, WO 2012/093108, WO 2012/072766 and PCT/EP13/054006.

WO 2012/126971 discloses yet another cover for covering and uncovering such a passage. In this document, the cover is pivotable about a pivoting axis that is generally parallel to the insertion direction and/or that is generally perpendicular to the mouth of the ingredient passage. The ingredient mouth and the ingredient passage can be configured to receive and guide an ingredient capsule, the passage and the mouth having a slide for guiding a guiding flange of the capsule to the ingredient processing module. The cover can have a planar portion that covers and uncovers the ingredient passage, the planar cover portion being arranged to pivot generally in its own plane. The cover may have a cover opening, such as a window, pivotable: over the passage to permit insertion of the ingredient through the opening into the ingredient processing module via the passage; and away from the passage to prevent insertion of the ingredient through the opening into the processing module. Further cover configurations for covering and uncovering such a passage are disclosed in PCT/EP13/064001 and in PCT/EP13/064003.

WO 2012/123440 discloses, in an embodiment illustrated in figures 6a-8b, a capsule positioner located inside the housing of a machine, the positioner comprising a rotating body that is rotatably mounted relative to the housing. In a first position, the rotating body may receive and hold a capsule into its seat. In a second position, the rotating body is configured to allow the capsule falling from the seat into the machine's brewing unit. The rotating body rotates from the first to the second position, rotating at the same time the capsule that is held in the seat. The rotating body however requires a significant space around it in order to rotate with the capsule held in the seat.

### Summary of the Invention

The invention relates to a machine using capsules, such as a machine for preparing a beverage from at least one ingredient capsule and dispensing such prepared beverage. For instance, the machine is a coffee, tea, chocolate, cacao, milk or soup preparation machine. Optionally, the machine is arranged for preparing within a processing module a beverage by passing hot or cold water or another liquid through a capsule containing an ingredient, such as a flavouring ingredient, of the beverage to be prepared, such as ground coffee or tea or chocolate or cacao or milk powder.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml, e.g. the volume for filling a cup or mug, depending on the type of beverage. Formed and dispensed beverages may be selected from ristrettos, espressos, lungos, cappuccinos, cafe latte, americano coffees, teas, etc... For example, a coffee machine may be configured for dispensing espressos, e.g. an adjustable volume of 20 to 60 ml per serving, and/or for dispensing lungos, e.g. a volume in the range of 70 to 150 ml per serving.

Typically, the capsule has an aluminium or plastic or paper enclosure and contains a content, such as a beverage ingredient, supplied within the capsule to the machine.

The machine, e.g. for preparing a beverage, comprises:
- a device for handling a capsule;
- a frame or a housing covering the device, the frame or housing delimiting an opening for passing a capsule through the frame or housing to the handling device, the frame or housing having a curved cross-section about the opening; and
- a barrier means, e.g. a gate, comprising a member movable from a closed position for preventing such capsule from passing through the opening to an open position for allowing such capsule to pass through the opening.

Optionally, the capsule comprises a container body and optionally a flange such as a flange protruding from the container body. The capsule's container body may be generally cup-shaped e.g. cylindrically, conically or frusto-conically shaped. The capsule may contain a beverage ingredient for instance selected from tea, coffee, cacao, milk and soup.

The housing usually has solid walls or panels protecting the inside of the machine from the outside environment and vice versa, for example for safety reasons and/or for protection against dust, dirt and moisture. The frame may have a grid-like structure, e.g. for structuring the machine. A machine may comprise either a frame or a housing or both. The frame and/or the housing may be used to support machine components, such as the capsule handling device and optional components such as a pump, thermal conditioner, fluid circuit, control unit, sensors, etc... Typically, the housing and/or the frame is/are stationary. The housing and/or frame may be arranged to rest on a support surface such as a table. The capsule handling device is typically located in a top part of the housing and/or frame.

The capsule handling device is typically integrated in a capsule processing module. The processing module may include an upstream fluid circuit for delivering a carrier liquid, such as water, into the capsule in the capsule handling device and a downstream fluid circuit having a beverage outlet for delivering from the capsule the product, e.g. a beverage, formed by the carrier liquid that is combined with the content of the capsule, e.g. a beverage ingredient.

The capsule handling device may be adapted for an insertion of a capsule of a first type and of a second type. Examples of such handling devices are disclosed in co-pending applications EP 2012187716.1, EP 2012187717.9, EP 2012187718.7, EP 2012197961.1, EP 2012189153.5, EP 2013196040.3, EP 2013196041.1 and EP 2013196042.9.

The movable member of the barrier means can be located above the capsule handling device and configured so that the capsule can be driven by gravity from the opening to the capsule handling device.

The cross-section of the housing or frame is curved in the sense that it deviates from a straight direction, usually in a smooth and continuous fashion. For instance, the curved cross-section of the housing is formed by the interception of the housing with a notional straight plane.

In accordance with the invention, the member is movable between its closed position and its open position along a curve that is generally parallel to the curved cross-section of the frame or housing.

Optionally, the member is movable along the curve:
- from its closed position to its open position and/or from its open position to its closed position; and/or
- that is parallel to the cross-section which extends along a generally circular or elliptic arch.

The curve along which the barrier means' member is moved is a line that deviates from a straight line, usually in a smooth and continuous fashion.

As opposed to prior art covering handles, e.g. as disclosed in WO 2007/135136, which are pivotable between a position extending along the machine housing to cover the passage and a position angled away therefrom to uncover the passage, the machine of the present invention does not need a significant volume of free space adjacent the machine's housing for the movement of the movable member of the barrier means. Similar considerations apply to WO 2012/126971 in which a capsule is moved around by a capsule positioner on top of the beverage machine before being released to the machine's processing module.

The frame or housing can be:
a) provided with a generally conical, cylindrical, spherical or ellipsoidal shape about the opening;
b) arranged to extend between the movable member of the barrier means and the capsule handling device or arranged so that the movable member of the barrier means extends between the capsule handling device and the frame or housing;
c) arranged to enclose at least part of a fluid circuit connected to the extraction device, the fluid circuit comprising one or more of:
   - a supply of liquid, such as water, for instance a reservoir or continuous supply of liquid, such as a supply of liquid provided with a filter for filtering the liquid supplied to the extraction device;
   - an outlet connected to an inlet of the capsule handling device, for instance to an inlet of an extraction chamber delimited by the capsule handling device for containing the capsule;
   - a pump, such as a piston pump or a diaphragm pump;
   - a thermal conditioner, such as a heater and/or cooler; and
   - one or more control elements, such as elements selected from valves, sensors, e.g. pressure sensors or flowmeter;
   and/or
d) arranged to enclose at least part of an electric control circuit, such as a controller and a user-interface for allowing a user to control machine operations.

Examples of upstream fluid arrangements are disclosed in WO 2009/074550 and in WO 2009/130099. The heater may be a thermoblock or an on demand heater (ODH), for instance an ODH type disclosed in EP 1 253 844, EP 1 380 243 and EP 1 809 151 or a thermoblock of the type disclosed in WO 2009/043865.

The barrier means may comprise the above movable member as a first movable member of the barrier means and may further comprise a second movable member. The second member can be movable from a closed position for preventing such capsule from passing through the opening to an open position for allowing such capsule to pass through the opening. For instance, the barrier means may be arranged so that:
a) the first and second members of the barrier means are movable in opposite directions between the closed and open positions; and/or
b) the second member of the barrier means is movable between its closed position and its open position along a curve that is generally parallel to the curved cross-section of the frame or housing, the second member being optionally movable along the curve:
   - from its closed position to its open position and/or from its open position to its closed position; and/or
   - that is parallel to the curved cross-section which extends along a generally circular or elliptic arch.

In an embodiment, the barrier member delimits a seat for receiving and positioning the capsule at the opening when the member is in its closed position. The seat can have a shape that generally matches an external portion of the capsule. The seat may have: a recessed bottom for receiving a container body of the capsule, such as a recessed bottom having a conical or frusto-conical or cylindrical or spherical or ellipsoidal shape; and/or a groove for receiving a flange of the capsule, such as a groove extending along a generally circular or elliptic direction. The seat may comprise a recessed bottom and a groove extending along and below the recessed bottom, such as a groove extending along a side of the recessed bottom for example along a front side of the recessed bottom.

In an embodiment, the barrier member in its closed position may inhibit fluid projections from the capsule handling device through the opening and/or may delimit one or more openings for releasing pressure, such as an opening formed by a gap between first and second movable barrier members.

The barrier member is movable between the open and the closed positions by an actuator that actuates via a transmission the barrier member. The actuator can be:
a) provided with a motor and/or a handle, suitable handles being for instance disclosed in WO2007/135136 and WO2010/015427, suitable motors being for instance disclosed in WO2012/025258, WO2012/025259 and WO2013/127476;
b) in interaction with the barrier member via a drive arm, such as a drive arm that is fixed to the barrier member, for instance a drive arm assembled to or integrally formed with the barrier member, the drive arm and the drive member being optionally in a general L-arrangement;
c) in interaction with the barrier member via a gear transmission such as a toothed or meshed gear transmission;
d) in interaction with the barrier member via an angular converter, such as a wheel or wheel sector acting on or reacting to a pinion or pinion sector;
e) in interaction with the barrier member via a linear transmission, such as a transmission part of linearly moving drive rod; and/or
f) in interaction with the barrier member via a linear-angular converter, such as a linear moving wedge or inclined surface mechanically acting on or reacting to an angularly moving edge or surface.

For instance, capsule handling device 20 is configured and actuated according to any of the teachings disclosed in WO 2005/004683, WO2007/135136, WO 2009/043630, WO 2012/093108, WO 2012/025258, WO 2012/025259, WO 2013/127476 and EP 2013196041.1.

The machine may include a support on which the barrier means are movably mounted. The support can be fixed to or integral with the frame or housing, such as extending, e.g. downwards, from the frame or housing as a frame or housing portion.

The capsule handling device may include a capsule handling part that is movable between a position for inserting and/or removing a capsule and a position for extracting the capsule. Examples of such handling parts are for example disclosed in WO 2005/004683, WO 2009/043630, WO 2013/127476 and EP 2013196041.1. For instance, the capsule handling part is:
a) provided with an outlet for an outflow of a product originating at least in part from a content of the capsule when the capsule is in the capsule handling device with the handling part in the extraction position, suitable outlets and their integration into a beverage machine are for example disclosed in WO 2012/072758 and WO 2013/127907;
b) provided with an extraction plate or lid, the plate or lid comprising one or more openings for an outflow of a product originating at least in part from a content of the capsule when the capsule is in the capsule handling device with the handling part in the extraction position, the extraction plate or lid optionally having one or more capsule openers for opening an adjacent closed face of the capsule or being devoid of any capsule openers, suitable extraction plates or lids being for example disclosed in EP 512 470;
c) provided with an inlet for feeding liquid into the chamber and/or into the capsule in the chamber;
d) provided with a cavity, such as a cup-shaped cavity, for receiving the capsule;
e) means for opening the capsule such as one or more of blades and piercing elements, suitable capsule opening means are for example disclosed in PCT/EP13/073530, EP 2013180166.4, EP2013180164.9 and EP2013180165.6;
f) movably mounted to the frame or housing or to said or a support;
g) driven manually or automatically, such as by a handle or a motor e.g. an electric, pneumatic, hydraulic and/or spring-based motor, suitable handles being for instance disclosed in WO2007/135136 and WO2010/015427, suitable motors being for instance disclosed in WO2012/025258, WO2012/025259 and WO2013/127476;
h) movable into a position for inserting the capsule and into a position for removing the capsule, such as inserting and removing positions that are identical or distant positions, the position for removing the capsule being for instance located between the positions for inserting and extracting said capsule, the movable member being optionally in its open position when the handling part is in the insertion position and in its closed position when the handling part is in the removal position. The latter configuration provides the advantage that the capsule upon its use can be evacuated from the extraction device without moving the movable member of the barrier means, for instance if no new capsule is intended for insertion at the time of removal of the used capsule or shortly thereafter; and/or
i) movable into a position for removing the capsule with the movable member in the closed position and movable into a position for inserting the capsule with the movable member in the open position.

The insertion position of the capsule handling part may be the same as the removal position, the movable member of the barrier means being either reopened for the capsule removal, or being deactivated for the capsule removal so as to remain in the closed position.

At removal, the capsule may be evacuated to an optional capsule collector arranged in the machine, e.g. a capsule collector arrangement of the type disclosed in WO 2009/074559 or WO 2009/135869.

Further to the movable capsule handling part, the capsule handling device may include a cooperating handling part that delimits with the movable handling part in the extraction position a chamber for enclosing at least part of the capsule, such as a chamber delimited by a cavity in the movable capsule handling part and/or by a cavity in the cooperating handling part. Examples of such movable and cooperating handling parts and their association are disclosed in WO 2007/135135, WO2007/135136, WO 2008/037642, WO 2009/043630, WO 2012/025258 and WO 2013/127476.

The cooperating handling part can be:
a) mounted stationary or movably to the frame or housing or to said or a support, or provided with a base mounted stationary to the frame or housing and a movable part mounted movably to the base and/or mounted movably to the frame or housing, such as a movable part forming a dynamic seal, e.g. a hydraulic seal, for sealing the chamber during an extraction of the capsule, e.g. as taught in WO 2008/037642 and WO 2009/115474;
b) provided, when the movable capsule handling part is devoid of any inlet for feeding liquid into the chamber, with an inlet for feeding liquid into the chamber and/or into the capsule in the chamber;
c) provided with means for opening the capsule such as one or more or blades and piercing elements, suitable capsule opening means being for example disclosed in PCT/EP13/073530, EP 2013180166.4, EP2013180164.9 and EP2013180165.6;
d) provided, when the movable capsule handling part is devoid of any outlet for a product outflow, with an outlet for an outflow of a product originating at least in part from a content of the capsule when the capsule is in the capsule handling device with the handling part in the extraction position, suitable outlets and their integration into a beverage machine are for example disclosed in WO 2012/072758 and WO 2013/127907;
e) provided, when the movable capsule handling part is devoid of any extraction plate or lid, with an extraction plate or lid that comprises one or more openings for an outflow of a product originating at least in part from a content of the capsule when the capsule is in the capsule handling device with the handling part in the extraction position, the extraction plate or lid optionally having one or more capsule openers for opening an adjacent closed face of the capsule or being devoid of any capsule openers, suitable extraction plates or lids being for example disclosed in EP 512 470; and/or
f) provided with a cavity, such as a cup-shaped cavity, for receiving the capsule.

The capsule handling device may comprise further to the movable handling part, and when present further to the cooperating handling part, a capsule guiding part for guiding the capsule at insertion to adjacent the movable handling part in the inserting position and/or at removal from adjacent the movable handling part in the removal position. Examples of such guiding parts are for example disclosed in WO 2005/004683. Optionally, the capsule guiding part is:
a) provided with a window for passing the capsule from the barrier means in the open position into the capsule guiding part, such as a window having a shape generally matching a cross-section of the capsule, e.g. if the capsule has a generally frusto-conical shape then the window may have a generally trapezoidal shape or if the capsule has generally the shape of a tablet then the window may have a generally rectangular shape;
b) provided with a groove for engaging with a flange protruding from the capsule, such as a pair of facing grooves engaging with opposite sides of the flange and/or at least one groove engaging with the flange during a transfer of the capsule to adjacent the movable handling part;
c) provided with an insertion passage for allowing a passage of the capsule to adjacent the movable handling part and/or from adjacent the movable handling part, such as a generally upright insertion passage along which the capsule can be driven by gravity, optionally the insertion passage leading to an evacuation passage through which the capsule is evacuated from the capsule handling device upon extraction, e.g. an upright evacuation passage;
d) provided with a capsule positioner for stopping the capsule in an intermediate position adjacent the movable handling part, optionally the capsule positioner being arranged for allowing the release of the capsule from the positioner when the capsule handling part is moved from the extraction position to the inserting and/or removing position, for instance the capsule positioner being arranged for allowing the release of the capsule from the capsule positioner:
   - when the movable handling part moves towards the extraction position, such as when the movable handling part is closer to the extraction position than to the inserting and/or removing position; or
   - when the movable handling part is in the extraction position; or
   - when the movable handling part moves towards the extraction position, such as when the movable handling part is closer to the extraction position than to the inserting and/or removing position;
   and/or
e) fixed to the movable handling part, or when present to said cooperating handling part, such as integral therewith or fixed thereto.

Capsule handling device may be adjustable to handle capsules of different sizes, for instance as disclosed in co-pending applications EP 2012187716.1, EP 2012187717.9, EP 2012187718.7, EP 2012197961.1, EP 2012189153.5, EP 2013196040.3, EP 2013196041.1 and EP 2013196042.9.

The movable handling part can be configured to directly or indirectly act onto the movable member of the barrier means to move the member between the open and closed positions of the movable member. For instance, the movable handling part is:
a) provided with a linear transmission, such as a linearly moving drive rod, for directly or indirectly moving the movable member of the barrier means between the open and closed positions;
b) configured to act onto the movable member of the barrier means by moving between the extraction position and the inserting and/or removing position; and/or
c) configured to act onto the movable member of the barrier means so as to move the member between the open and closed positions of the movable member only when the movable handling part is closer to its inserting and/or removing position than to its extraction position, such as configured to act onto the movable member only when the movable handling part is at a traveling distance from its inserting and/or removing position that corresponds to less than 30% of a maximum traveling distance between the extraction position and the inserting and/or removing position, such as less than 20%, e.g. less than 10% or 5%.

The invention also relates to a method for inserting a capsule into a capsule handling device of a machine as described above. The method comprises: providing a capsule; and passing the capsule through the opening of the frame or housing to the handling device. The movable member of the barrier means is in its closed position to prevent the capsule from passing through the opening and moved from its closed position to its open position to allow the capsule to pass through the opening. The movable member is moved between its closed position and its open position along the curve that is generally parallel to the curved cross-section of the frame or housing. The member is optionally moved along this curve:
- from its closed position to its open position and/or from its open position to its closed position; and/or
- that is parallel to the cross-section which extends along a generally circular or elliptic arch.

Another aspect of the invention relates to a combination of a machine as described above and a capsule.

A further aspect of the invention relates to a use of a capsule for: being inserted into a machine as described above; being inserted into a machine according to a method described above; or providing a combination as described above.

The capsule is optionally:
a) at least partly filled with a beverage ingredient for instance selected from tea, coffee, cacao, milk and soup;
b) provided with a container body, such as a container body that is:
   - generally tablet-shaped or cup-shaped e.g. cylindrically, conically or frusto-conically shaped; and/or
   - covered with a face or lid through which a liquid is passed during extraction, such as a face or lid that is sealed and piercible or tearable in the capsule handling device or that is pre-opened before insertion into the capsule handling device, optionally the face or lid protruding radially to form a flange;
   and/or
c) provided with a flange, such as a flange that protrudes from a container body of the capsule and/or that is annular, optionally such a flange being fixed to a radially protruding flange of said or a face of lid of the capsule.

### Brief Description of the Drawings

The invention will now be described with reference to the schematic drawings, wherein:
- Figure 1 illustrates part of a machine and a capsule according to the invention with a barrier means in a closed position;
- Figure 2 illustrates the same machine and capsule with the barrier means in an open position; and
- Figures 3 to 7 illustrate an operative sequence of the barrier means between the open and the closed position in combination with a capsule.

### Detailed description

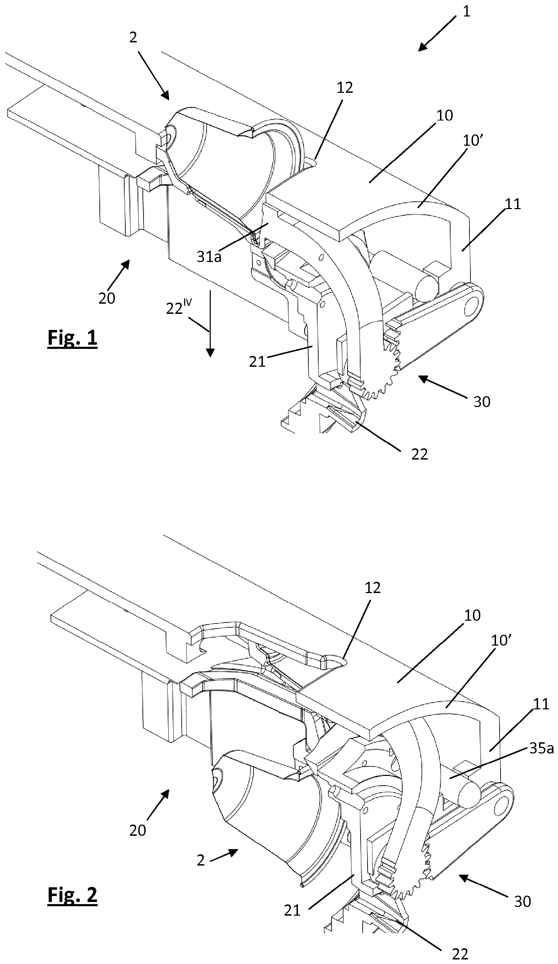

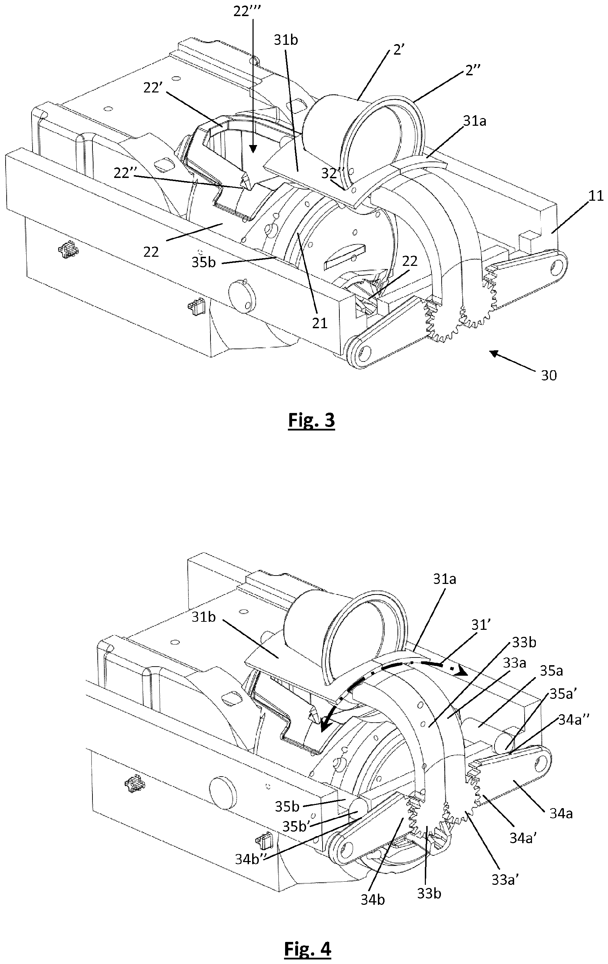

Figures 1 to 7 illustrate part of an exemplary embodiment of a machine 1 according to the invention. In Figs 1 and 2, machine 1 is shown with part of housing 10 that could be substituted by a frame. In Figs 3 to 7, housing 10 is hidden to show the operation of barrier means 30.

Machine 1 can be a beverage preparation machine. However, the machine can be for using capsules for any purpose including painting, i.e. for using capsules containing paint.

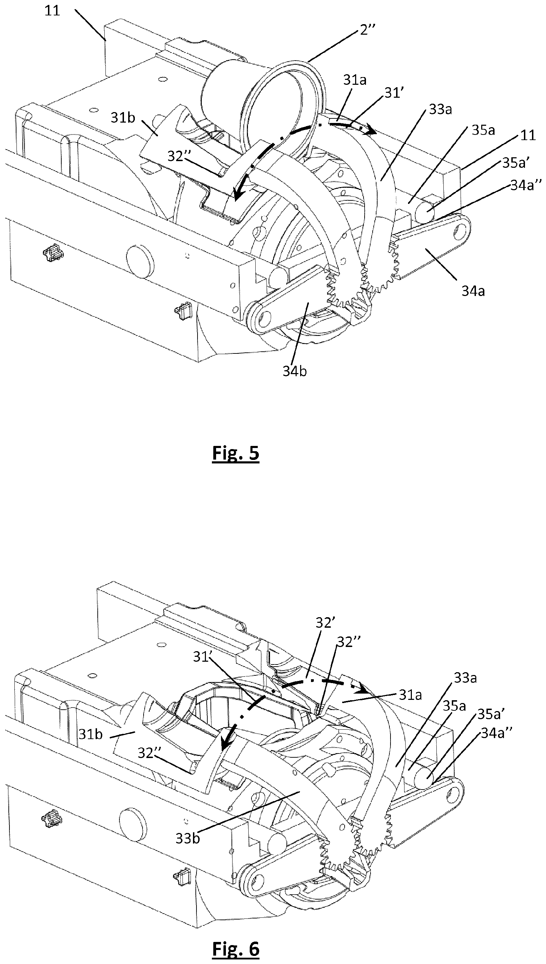

Machine 1 includes :
- a device 20 for handling a capsule 2;
- as mentioned and illustrated in Figs 1 and 2, a housing 10 covering device 20, housing 10 delimiting an opening 12 for passing capsule 2 through housing 10 to device 20, housing 10 having a curved cross-section 10' about opening 12; and
- a barrier means 30, e.g. a gate, comprising a member 31a;31b movable from a closed position (Figs 1 and 3) for preventing capsule 2 from passing through opening 12 to an open position (Figs 2 and 6) for allowing such capsule 2 to pass through opening 12.

Capsule 2 can containing a beverage ingredient for instance selected from tea, coffee, cacao, milk and soup.

Capsule 2 may comprise a container body 2' and optionally a flange 2" such as a flange protruding from container body 2'. The capsule's container body 2' can be generally tablet-shaped or cup-shaped e.g. cylindrically, conically or frusto-conically shaped. Capsule 2 may include a flow-through face, for example extending across flange 2", for confining the content of capsule 2 therein. Such a capsule face may be sealed before use and opened in capsule handling device 20 or it may be pre-opened before use.

As illustrated on Figs 2 and 3 on the one hand and on Figs 5 to 7 on the other hand, member 31a;31b of barrier means 30 may be movable between its closed position and its open position along a curve 31' that is generally parallel to curved cross-section 10' of housing 10. For instance, member 31a;31b is movable along curve 31' :
- from its closed position to its open position and/or from its open position to its closed position; and/or
- that is generally parallel to the cross-section (10') which extends along a generally circular or elliptic arch.

Hence, member(s) 31a;31b may be on the same path when moved on the one hand from the open to the closed position and on the other hand from the closed to the open position, or member(s) 31a;31b may be on different paths depending on the direction of the movement. In the latter case, at least one of the paths or a portion thereof is generally parallel to the curved cross-section 10' of housing 10.

For example, curved cross-section 10' and curve 31' form a generally circular or an elliptic arch.

Housing 10 can be :
a) provided with a generally conical, cylindrical, spherical or ellipsoidal shape about the opening 1, for example housing 10 forms a cylindrical portion about opening 10;
b) arranged so that member 31;31b of barrier means 30 extends between capsule handling device 20 and housing 10;
c) arranged to enclose at least part of a fluid circuit (not shown) connected to extraction device 20, the fluid circuit comprising one or more of:
   - a supply of liquid, such as water, for instance a reservoir or continuous supply of liquid, such as a supply of liquid provided with a filter for filtering the liquid supplied to the extraction device;
   - an outlet connected to an inlet of capsule handling device 20, for instance to an inlet of an extraction chamber delimited by handling device (20) for containing capsule (2);
   - a pump, such as a piston pump or a diaphragm pump;
   - a thermal conditioner, such as a heater and/or cooler; and
   - one or more control elements, such as elements selected from valves, sensors, e.g. pressure sensors or flowmeter or other sensors for monitoring characteristics of the fluid circuit and/or of capsule 2;
   and/or
d) arranged to enclose at least part of an electric control circuit (not shown), such as a controller and a user-interface for allowing a user to control machine operations, such as a machine's pump, thermal conditioner and/or a movement of movable capsule handling part 21.

Examples of upstream fluid arrangements are disclosed in WO 2009/074550 and in WO 2009/130099. The heater may be a thermoblock or an on demand heater (ODH), for instance an ODH type disclosed in EP 1 253 844, EP 1 380 243 and EP 1 809 151 or a thermoblock of the type disclosed in WO 2009/043865.

Examples of suitable brewing units delimiting brewing chambers and suitable capsule management are for example disclosed in WO 2005/004683, WO2007/135136, WO 2009/043630 and EP 13196041.1, which are hereby incorporated by way of reference. Suitable fluid circuits of processing modules are for instance disclosed in WO 2009/074550 and WO 2009/130099, which are hereby incorporated by way of reference. Control unit configurations and connections are for example disclosed in WO 2009/043851 and WO 2009/043865.

Barrier means 30 may comprise movable member 31a as a first movable member 31a and a second movable member 31b. For instance, second member 31b is movable from a closed position for preventing capsule 2 from passing through opening 12 to an open position for allowing capsule 2 to pass through the opening 12.

First and second members 31a,31b of barrier means 30 may be movable in opposite directions between the closed and open positions (Figs 4 to 6). Second member 31b of barrier means 30 can be movable between its closed position and its open position along a curve 31' that is generally parallel to curved cross-section 10' of housing 10. For instance, second member 31b is movable along curve 31':
- from its closed position to its open position and/or from its open position to its closed position; and/or
- that is parallel to cross-section 10' which extends along a generally circular or elliptic arch.

As illustrated in Figs 5 to 7, barrier member 31a;31b can delimit a seat 32 for receiving and positioning capsule 2 at opening 12 when member 31a;31b is in its first position. For example, seat 32 has a shape that generally matches an external portion of capsule 2. Thereby, a proper orientation of capsule 2 can be ensured for passing capsule 2 through opening 12 to capsule handling device 20. Seat 32 may have:
- a recessed bottom 32' for receiving a container body 2' of capsule 2, such as a recessed bottom 32' having a conical or frusto-conical or cylindrical or spherical or ellipsoidal shape; and/or
- a groove 32" for receiving a flange 2" of capsule 2, such as a groove 32" extending along a generally circular or elliptic direction.

For example, seat 32 has a recessed bottom 32' and a groove 32" extending along and below recessed bottom 32', such as a groove 32" extending along a side of recessed bottom 32' for instance along a front side of recessed bottom 32'.

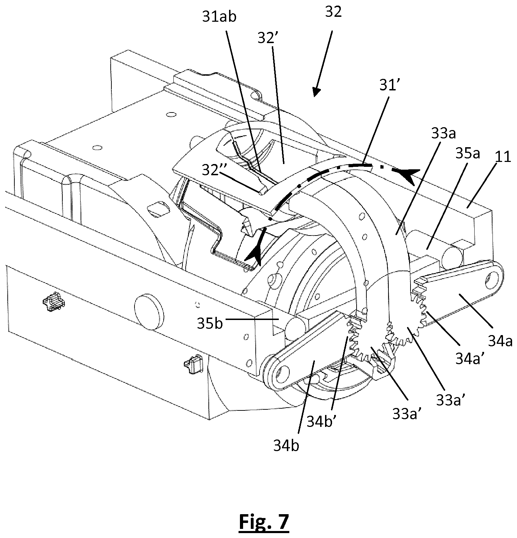

Barrier member 31a;31b in the closed position may inhibit fluid projections from capsule handling device 20 through opening 12. Barrier member 31a;31b can delimit one or more openings 31ab for releasing pressure, such as an opening 31ab formed by a gap between first and second movable barrier members 31a,31b. See Fig. 7.

Barrier member 31a;31b can be movable between the open and the closed positions (Figs 4 to 6) by an actuator 35a;35b that actuates via a transmission 33a,34a barrier member 31a;31b. Optionally, actuator 35a;35b is:
a) provided with a motor and/or a handle (not shown), suitable handles being for instance disclosed in WO2007/135136 and WO2010/015427, suitable motors being for instance disclosed in WO2012/025258, WO2012/025259 and WO2013/127476, actuator 35a;35b being for example moved in opening direction 31' (Figs 4 to 6) by a motor or a handle and in the closing direction 31' (Fig. 7) by a return spring device (not shown) such as a spring mounted on a drive member 33a;33b,34a;34b;
b) in interaction with barrier member 31a;31b via a drive arm 33a;33b, such as a drive arm 33a;33b that is fixed to the barrier member 31a;31b, for instance a drive arm 33a;33b assembled to or integrally formed with the barrier member 31a;31b, drive arm 33a;33b and drive member 31a;31b being optionally in an L-arrangement;
c) in interaction with barrier member 31a;31b via a gear transmission 33a,34a;33b,34b such as a toothed or meshed gear transmission 33a',34a';33b',34b';
d) in interaction with barrier member 31;31b via an angular converter 33a,34a;33b,34b, such as wheel or wheel sector 34a;34b acting on or reacting to a pinion or pinion sector 33a';33b';
e) in interaction with barrier member 31;31b via a linear transmission 35a';35b', such as a transmission part 35a';35b' of linearly moving drive rod 35a;35b; and/or
f) in interaction with barrier member 31a;31b via a linear angular converter 34a,35a;34b,35b, such as a linear moving wedge or inclined surface 35a';35b' mechanically acting on or reacting to an angularly moving edge or surface 34a";34b".

For instance, capsule handling device 20 is configured and actuated according to any of the teachings disclosed in WO 2005/004683, WO2007/135136, WO 2009/043630, WO 2012/093108, WO 2012/025258, WO 2012/025259 and WO 2013/127476.

Machine 1 may comprise a support 11 on which barrier means 30 are movably mounted. Support 11 can be fixed to or integral with housing 10. For instance, support 11 forms a housing portion extending from housing 10, such as a downward extension of housing 10.

Capsule handling device 20 may include a capsule handling part 21 that is movable between a position for inserting and/or removing capsule 2 (Figs 2 and 6) and a position for extracting capsule 2 (Fig. 3). Examples of such handling parts are for example disclosed in WO 2005/004683. Capsule handling part 21 can be:
a) provided with an outlet 22 for an outflow of a product originating at least in part from a content of capsule 2 when capsule 2 is in capsule handling device 20 with handling part 21 in the extraction position, suitable outlets and their integration into a beverage machine are for example disclosed in WO 2012/072758 and WO 2013/127907;
b) provided with an extraction plate or lid (not shown) that comprises one or more openings for an outflow of a product originating at least in part from a content of capsule 2 when capsule 2 is in capsule handling device 20 with handling part 21 in the extraction position, the extraction plate or lid optionally having one or more capsule openers for opening an adjacent closed face of capsule 2 or being devoid of any capsule openers when capsule 2 is pre-opened adjacent extraction plate or lid, suitable extraction plates or lids being for example disclosed in EP 512 470;
c) provided with an inlet for feeding liquid into the chamber and/or into capsule 2 in the chamber;
d) provided with a cavity, such as a cup-shaped cavity, for receiving capsule 2;
e) means for opening the capsule such as one or more of blades and piercing elements, suitable capsule opening means being for example disclosed in PCT/EP13/073530, EP 2013180166.4, EP2013180164.9 and EP2013180165.6;
f) movably mounted to housing 10 or to support 11;
g) driven manually or automatically, such as by a handle or a motor e.g. an electric, pneumatic, hydraulic and/or spring-based motor, suitable handles being for instance disclosed in WO2007/135136 and WO2010/015427, suitable motors being for instance disclosed in WO2012/025258, WO2012/025259 and WO2013/127476;
h) movable into a position for inserting capsule 2 and into a position for removing capsule 2, such as inserting and removing positions that are identical or distant positions (Figs 6 and 7), the position for removing capsule 2 (Fig. 7) being for instance located between the positions for inserting (Fig. 6) and extracting (Fig. 3) capsule 2, movable member 31a;31b being optionally in its open position (Fig. 6) when handling part 21 is in the insertion position and in its closed position (Fig. 7) when handling part 21 is in the removal position; and/or
i) movable into a position for removing said capsule (2) with the movable member (31a;31b) in the closed position (Fig. 7) and movable into a position for inserting capsule (2) with the movable member (31a;31b) in the open position (Fig. 6).

At removal, capsule 2 can be evacuated to an optional capsule collector arranged in machine 1, e.g. a collector arrangement of the type disclosed in WO 2009/074559 or WO 2009/135869.

Moreover, capsule handling device 20 typically includes a downstream fluid arrangement leading into an outlet 22 for dispensing to a user, e.g. to an area for placing a user-cup or a user-mug, the beverage formed in the extraction chamber for instance by mixing an ingredient in capsule 2 with circulating liquid. The dispensing area may be delimited at the bottom by a support surface for holding a user cup or mug. Such support surfaces are well known in the art, e.g. as disclosed in EP 1 867 260 and WO 2009/074557.

Further to movable capsule handling part 21, capsule handling device 20 may comprise a cooperating handling part that delimits with movable handling part 21 in the extraction position a chamber for enclosing at least part of capsule 2. The chamber can be delimited by a cavity in movable capsule handling part 21 and/or by a cavity in the cooperating handling part. Examples of such movable and cooperating handling parts and their association are disclosed in WO 2007/135135, WO2007/135136, WO 2008/037642, WO 2009/043630, WO 2012/025258 and WO 2013/127476. Optionally, cooperating handling part is:
a) mounted stationary or movably to housing 10 or to support 11, or provided with a base mounted stationary to housing 10 and a movable part mounted movably to the base and/or mounted movably to housing 10, such as a movable part forming a dynamic seal, e.g. a hydraulic seal, for sealing the chamber during an extraction of capsule 2, e.g. as taught in WO 2008/037642 and WO 2009/115474;
b) provided, when the movable capsule handling part is devoid of any inlet for feeding liquid into the chamber, with an inlet for feeding liquid into the chamber and/or into capsule 2 in the chamber;
c) provided with means for opening capsule 2 such as one or more or blades and piercing elements;
d) provided, when the movable capsule handling part is devoid of any outlet for a product outflow, with an outlet for an outflow of a product originating at least in part from a content of capsule 2 when capsule 2 is in capsule handling device 20 with handling part 21 in the extraction position, suitable outlets and their integration into a beverage machine are for example disclosed in WO 2012/072758 and WO 2013/127907;
e) provided, when movable capsule handling part 21 is devoid of any extraction plate or lid, with an extraction plate or lid that comprises one or more openings for an outflow of a product originating at least in part from a content of capsule 2 when capsule 2 is in capsule handling device 20 with handling part 21 in the extraction position, the extraction plate or lid optionally having one or more capsule openers for opening an adjacent closed face of capsule 2 or being devoid of any capsule openers, suitable extraction plates or lids being for example disclosed in EP 512 470; and/or
f) provided with a cavity, such as a cup-shaped cavity, for receiving capsule 2.

Capsule handling device 20 may comprise further to movable handling part 21, and when present further to the cooperating handling part, a capsule guiding part 22 for guiding capsule 2 at insertion to adjacent movable handling part 21 in the inserting position and/or at removal from adjacent movable handling part 21 in the removal position. Examples of such guiding parts are for example disclosed in WO 2005/004683 and the references cited therein. Optionally, capsule guiding part 22 is:
a) provided with a window 22' for passing capsule 2 from barrier means 30 in the open position into capsule guiding part 22, such as a window 22' having a shape generally matching a cross-section of capsule 2;
b) provided with a groove 22" for engaging with a flange 2" protruding from capsule 2, such as a pair of facing grooves 22" engaging with opposite sides of flange 2" and/or at least one groove 22" engaging with flange 2" during a transfer of capsule 2 to adjacent movable handling part 21;
c) provided with an insertion passage 22"' for allowing a passage of capsule 2 to adjacent movable handling part 21 and/or from adjacent movable handling part 21 such as a generally upright passage 22"' along which capsule 2 can be driven by gravity, optionally insertion passage 22"' leading to an evacuation passage 22^{IV} through which capsule 2 is evacuated from capsule handling device 20 upon extraction, e.g. an upright evacuation passage;
d) provided with a capsule positioner for stopping capsule 2 in an intermediate position adjacent movable handling part 21, optionally the capsule positioner being arranged for allowing the release of capsule 2 from the positioner when capsule handling part 21 is moved from the extraction position to the inserting and/or removing position. For instance the capsule positioner is arranged for allowing the release of capsule 2 from the capsule positioner:
   - when movable handling part 21 moves towards the extraction position, such as when movable handling part 21 is closer to the extraction position than to the inserting and/or removing position; or
   - when movable handling part 21 is in the extraction position; or
   - when movable handling part 21 moves towards the extraction position, such as when movable handling part 21 is closer to the extraction position than to the inserting and/or removing position;
   and/or
e) fixed to movable handling part 21, or when present said cooperating handling part, such as integral therewith or fixed thereto.

Capsule handling device 20 may be adjustable to handle capsules of different sizes, for instance as disclosed in co-pending applications EP 2012187716.1, EP 2012187717.9, EP 2012187718.7, EP 2012197961.1, EP 2012189153.5, EP 2013196040.3, EP 2013196041.1 and EP 2013196042.9.

Machine 1 may comprise a capsule detector, for instance a detector adapted to detect the presence of capsule 2 at movable member 31a;31b and/or to identify whether the detected capsule is of a first or a second type different to the first type, e.g. by sensing a dimension of a capsule or by reading a code incorporated in a capsule. More particularly, a capsule-length detector may be configured to determine the type of the capsule according to the length of the capsule. For example, the capsule-length detector may be configured to detect the presence of a metallic capsule in the seat, and then, determine if the detected capsule is of the first type or the second type by checking if the maximum length of the capsule along its axis of symmetry is sensibly equal to a first length L1 or to a second length L2 corresponding respectively to the first capsule type and second capsule type. Such a detection is for example disclosed in co-pending application EP 2012187762.5. Capsule characteristics that are detected by such a detector may be used to parameterize the subsequent operation by machine 1, for instance a capsule extraction process, e.g. the pressure, temperature and flow of liquid circulated into capsule 2.

Movable handling part 21 can be configured to directly or indirectly act onto movable member 31a;31b of the barrier means 30 to move member 31a;31b between the open and closed positions of movable member 31a;31b (Figs 3 to 7). Optionally, movable handling part 21 is:
a) provided with a linear transmission 35a;35b, such as a linearly moving drive rod 35a;35b, for directly or indirectly moving movable member 31a;31b of barrier means 30 between the open and closed positions;
b) configured to act onto movable member 31a;31b of barrier means 30 by moving between the extraction position and the inserting and/or removing position; and/or
c) configured to act onto movable member 31a;31b of barrier means 30 so as to move member 31a;31b between the open and closed positions of movable member 31a;31b only when movable handling part 21 is closer to its inserting and/or removing position than to its extraction position, such as configured to act onto movable member 31a;31b only when movable handling part 21 is at a traveling distance from its inserting and/or removing position that corresponds to less than 30% of a maximum traveling distance between the extraction position and the inserting and/or removing position, for instance less than 20%, e.g. less than 10% or 5%.

For operating machine 1 with capsule 2, a capsule 2 must be provided and then passed through opening 12 of housing 10 towards handling device 20. Movable member 31a;31b of barrier means 30 is in its closed position to prevent capsule 2 from passing through opening 12 and moved from its closed position to its open position to allow capsule 2 to pass through opening 12. Member 31a;31b is moved between its closed position and its open position along curve 31' that is generally parallel to curved cross-section 10' of housing 10. For instance, member 31a;31b is moved along curve 31':
- from its closed position to its open position and/or from its open position to its closed position; and/or
- that is parallel to cross-section 10' which extends along a generally circular or elliptic arch.

Machine 1 may be combined with a capsule 2. Optionally, such capsule is:
a) at least partly filled with a beverage ingredient for instance selected from tea, coffee, cacao, milk and soup;
b) provided with a container body 2', such as a container body that is:
   - generally tablet-shaped or cup-shaped e.g. cylindrically, conically or frusto-conically shaped; and/or
   - covered with a face or lid through which a liquid is passed during extraction, such as a face or lid that is sealed and piercible or tearable in capsule handling device 20 or that is pre-opened before insertion into the capsule handling device (20), optionally the face or lid protruding radially to form a flange;
   and/or
c) provided with a flange 2", such as a flange 2" that protrudes from a container body 2' of capsule 2 and/or that is annular, optionally such a flange 2" being fixed to a radially protruding flange of said or a face of lid.

Generally speaking, capsule 2 may be of the type described above under the header "field of the invention". Capsule 2 may have a container-body 21, e.g. a generally cup-shaped body, having a flange 23 at a rim of body 21 to which a lid 22 is attached, in particular sealed. Suitable capsules are for example disclosed in EP 0 512 468 und EP 0 512 470 and 1 859 714 and the reference cited therein.

Hence capsule 2 may be used for being inserted into such a machine 1, for being inserted into such a machine 1 by the above operating method, or for providing the above combination of machine 1 and capsule 2.

Upon extraction, capsule 2 may be evacuated from capsule handling device 20 to a used capsule collector of machine 1, for example a capsule collector of the type disclosed in WO 2009/074559.

In Fig. 3, movable capsule handling part 21 is in its extraction position. In Fig. 4, movable capsule handling part 21 is close to the inserting and/or removing position, barrier member 21 is still in the closed position. In Figs 5 to 6, movable capsule handling part 21 is closer to the inserting and/or removing position, barrier member 31a,31b being progressively moved to the open position, which is reached in Fig. 6 in which handling part 21 has reached the inserting and/or removing position and the movable barrier member 31a;31b is in the open position. In Fig. 7, capsule handling part 21 is moved back towards the extraction position, barrier member 31a;31b having been moved back into the closed position. In Figs 1 and 3, an unused capsule 2 is placed on barrier member 31a;31b. In Figs 4 and 5, barrier member 31a;31b is moved to its open position. In Figs 2 and 6, barrier member 31a;31b is in the open position and allows the passage of capsule 2 to handling device 20. In Fig. 7, capsule handling device part 21 is moved with capsule 2 from the insertion and/or removal position towards its extraction position (Fig. 3), barrier member 31a;31b having been brought back into its closed position, for instance under the effect of a return spring device mounted on member 33a;33b and/or member 34a;34b. For the removal of capsule 2, movable handling part 21 may be moved from the extraction position (Fig 3) to the removal position (Fig. 7) that is located between the extraction position (Fig. 3) and the insertion position (Fig. 6). Alternatively, the insertion position may be the same as the removal position, movable member 31a,31b being either reopened for the capsule removal, or being deactivated for the capsule removal so as to remain in the closed position.

## Claims

1. A machine (1), such as a machine for preparing a beverage, comprising:
- a device (20) for handling a capsule (2), such as a capsule (2) containing a beverage ingredient for instance selected from tea, coffee, cacao, milk and soup, said capsule (2) comprising for instance a container body (2'), the capsule's container body (2') being for instance generally cup-shaped e.g. cylindrically, conically or frusto-conically shaped;
- a frame or a housing (10) covering the device (20), the frame or housing (10) delimiting an opening (12) for passing a capsule (2) through the frame or housing (10) to the handling device (20), the frame or housing having a curved cross-section (10') about the opening; and
- a barrier means (30), e.g. a gate, comprising a member (31a;31b) movable from a closed position for preventing such capsule (2) from passing through the opening (12) to an open position for allowing such capsule (2) to pass through the opening (12),
**characterised in that** the barrier means (30) comprises said movable member (31a;31b) as a first movable member (31a) of the barrier means (30) and a second movable member (31b) of the barrier means (30), the first member (31a) and the second member (31b) being movable from a closed position for preventing such capsule (2) from passing through the opening (12) to an open position for allowing such capsule (2) to pass through the opening (12), the first member (31a) and the second member (31b) being movable between their closed position and their open position along a curve (31') that is generally parallel to the curved cross-section (10') of the frame or housing (10), the first and second members (31a;31b) of the barrier means (30) being movable in opposite directions between the closed and open positions.

2. The machine of claim 1, wherein the frame or housing (10) is arranged to extend between the movable member of the barrier means and the capsule handling device or arranged so that the member (31;31b) of the barrier means extends between the capsule handling device (20) and the frame or housing (10).

3. The machine of claim 1 or 2, wherein the first movable member (31a) and the second movable member (31b) are movable between their closed position and their open position along the curve (31') that is parallel to the cross-section (10') which extends along a generally circular or elliptic arch.

4. The machine of any preceding claim, wherein the barrier member (31a;31b) delimits a seat (32) for receiving and positioning said capsule (2) at the opening (12) when the member is in its closed position, the seat (32) having optionally a shape that generally matches an external portion of said capsule (2).

5. The machine of claim 4, wherein the seat (32) has a recessed bottom (32') for receiving a container body (2') of said capsule (2) and/or a groove (32") for receiving a flange (2") of said capsule (2).

6. The machine of any preceding claim, wherein the barrier member (31a;31b) in its closed position inhibits fluid projections from the capsule handling device (20) through the opening (12).

7. The machine of any preceding claim, wherein the barrier member (31a;31b) is movable between the open and the closed positions by an actuator (35a;35b) that actuates via a transmission (33a,34a) the barrier member (31a;31b) .

8. The machine of any preceding claim, which comprises a support (11) on which the barrier means (30) are movably mounted, the support (11) being optionally fixed to or integral with the frame or housing (10) such as extending, e.g. downwards, from frame or housing (10) as a frame or housing portion.

9. The machine of any preceding claim, wherein the capsule handling device (20) comprises a capsule handling part (21) that is movable between a position for inserting and/or removing a capsule and a position for extracting the capsule.

10. The machine of claim 9, wherein, further to said movable capsule handling part (21), the capsule handling device comprises a cooperating handling part that delimits with the movable handling part (21) in the extraction position a chamber for enclosing at least part of said capsule (2).

11. The machine of claim 9 or 10, wherein the capsule handling device (20) comprises further to the movable handling part (21), and when present further to said cooperating handling part, a capsule guiding part (22) for guiding said capsule (2) at insertion to adjacent the movable handling part (21) in the inserting position and/or at removal from adjacent the movable handling part (21) in the removal position.

12. The machine of any one of claims 9 to 11, wherein the movable handling part (21) is configured to directly or indirectly act onto the movable member (31a;31b) of the barrier means (30) to move the member (31a;31b) between the open and closed positions of the movable member (31a;31b).

13. A method for inserting a capsule (2) into a capsule handling device (20) of a machine (1) as defined in any preceding claim, comprising:
- providing a capsule (2); and
- passing the capsule (2) through the opening (12) of the frame or housing (10) to the handling device (20),
whereby the first and second movable members (31a;31b) of the barrier means (30) are moved from their closed position to their open position to allow the capsule (2) to pass through the opening (12) and moved from their open position to their closed position to prevent the capsule (2) from passing through the opening, wherein the members (31a;31b) are moved between their closed position and their open position along said curve (31') that is generally parallel to the curved cross-section (10') of the frame or housing (10), the first and second members (31a;31b) being moved in opposite directions between the closed and open positions.

14. A combination of a machine (1) as defined in any one of claims 1 to 12 and a capsule (2), the capsule (2) being at least partly filled with a beverage ingredient.

15. Use of a capsule (2) for:
- being inserted into a machine as defined in any one of claims 1 to 12;
- being inserted into a machine according to a method as defined in claim 13; or
- providing a combination as defined in claim 14.

## Patentansprüche

1. Maschine (1), wie eine Maschine zur Zubereitung eines Getränks, umfassend:
- eine Vorrichtung (20) zur Handhabung einer Kapsel (2), wie einer Kapsel (2), die einen Getränkeinhaltsstoff enthält, der beispielsweise ausgewählt ist aus Tee, Kaffee, Kakao, Milch und Suppe, wobei die Kapsel (2) beispielsweise einen Behälterkörper (2') umfasst, wobei der Behälterkörper (2') der Kapsel beispielsweise im Allgemeinen becherförmig, z. B. zylindrisch, kegelförmig oder kegelstumpfförmig ist;
- einen Rahmen oder ein Gehäuse (10), der bzw. das die Vorrichtung (20) abdeckt, wobei der Rahmen oder das Gehäuse (10) eine Öffnung (12) zum Hindurchführen einer Kapsel (2) durch den Rahmen oder das Gehäuse (10) zu der Handhabungsvorrichtung (20) begrenzt, wobei der Rahmen oder das Gehäuse einen gekrümmten Querschnitt (10') um die Öffnung aufweist; und
- ein Sperrmittel (30), z. B. eine Sperre, umfassend ein Element (31a; 31b), das aus einer geschlossenen Position zum Verhindern des Durchgangs einer solchen Kapsel (2) durch die Öffnung (12) in eine offene Position zum Ermöglichen des Durchgangs einer solchen Kapsel (2) durch die Öffnung (12) beweglich ist,
**dadurch gekennzeichnet, dass** das Sperrmittel (30) das bewegliche Element (31a; 31b) als ein erstes bewegliches Element (31a) des Sperrmittels (30) und ein zweites bewegliches Element (31b) des Sperrmittels (30) umfasst, wobei das erste Element (31a) und das zweite Element (31b) aus einer geschlossenen Position zum Verhindern des Durchgangs einer solchen Kapsel (2) durch die Öffnung (12) in eine offene Position zum Ermöglichen des Durchgangs einer solchen Kapsel (2) durch die Öffnung (12) beweglich ist, wobei das erste Element (31a) und das zweite Element (31b) zwischen ihrer geschlossenen Position und ihrer offenen Position entlang einer Krümmung (31') beweglich sind, die im Allgemeinen parallel zu dem gekrümmten Querschnitt (10') des Rahmens oder Gehäuses (10) liegt, wobei das erste und das zweite Element (31a; 31b) des Sperrmittels (30) in entgegengesetzten Richtungen zwischen der geschlossenen und der offenen Position beweglich sind.

2. Maschine nach Anspruch 1, wobei der Rahmen oder das Gehäuse (10) derart angeordnet ist, dass er bzw. es sich zwischen dem beweglichen Element des Sperrmittels und der Kapselhandhabungsvorrichtung erstreckt, oder derart angeordnet ist, dass sich das Element (31; 31b) des Sperrmittels zwischen der Kapselhandhabungsvorrichtung (20) und dem Rahmen oder Gehäuse (10) erstreckt.

3. Maschine nach Anspruch 1 oder 2, wobei das erste bewegliche Element (31a) und das zweite bewegliche Element (31b) zwischen ihrer geschlossenen Position und ihrer offenen Position entlang der Krümmung (31') beweglich sind, die parallel zu dem Querschnitt (10') liegt, der sich entlang einem im Allgemeinen kreisförmigen oder elliptischen Bogen erstreckt.

4. Maschine nach einem der vorstehenden Ansprüche, wobei das Sperrelement (31a; 31b) einen Sitz (32) zum Aufnehmen und Positionieren der Kapsel (2) an der Öffnung (12) begrenzt, wenn sich das Element in seiner geschlossenen Position befindet, wobei der Sitz (32) wahlweise eine Form aufweist, die im Allgemeinen mit einem äußeren Abschnitt der Kapsel (2) übereinstimmt.

5. Maschine nach Anspruch 4, wobei der Sitz (32) einen ausgesparten Boden (32') zum Aufnehmen eines Behälterkörpers (2') der Kapsel (2) und/oder eine Nut (32") zum Aufnehmen eines Flansches (2") der Kapsel (2) aufweist.

6. Maschine nach einem der vorstehenden Ansprüche, wobei das Sperrelement (31a; 31b) in seiner geschlossenen Position Fluidprojektionen von der Kapselhandhabungsvorrichtung (20) durch die Öffnung (12) verhindert.

7. Maschine nach einem der vorstehenden Ansprüche, wobei das Sperrelement (31a; 31b) zwischen der offenen und der geschlossenen Position durch einen Aktuator (35a; 35b) beweglich ist, der das Sperrelement (31a; 31b) über ein Getriebe (33a, 34a) betätigt.

8. Maschine nach einem der vorstehenden Ansprüche, die einen Träger (11) umfasst, an dem die Sperrmittel (30) beweglich befestigt sind, wobei der Träger (11) wahlweise an dem Rahmen oder Gehäuse (10) fixiert oder einstückig mit diesem ausgebildet ist, sich beispielsweise von dem Rahmen oder Gehäuse (10) als Rahmen- oder Gehäuseabschnitt, z. B. nach unten, erstreckt.

9. Maschine nach einem der vorstehenden Ansprüche, wobei die Kapselhandhabungsvorrichtung (20) ein Kapselhandhabungsteil (21) umfasst, das zwischen einer Position zum Einsetzen und/oder Entfernen einer Kapsel und einer Position zum Entnehmen der Kapsel beweglich ist.

10. Maschine nach Anspruch 9, wobei die Kapselhandhabungsvorrichtung neben dem beweglichen Kapselhandhabungsteil (21) ein zusammenwirkendes Handhabungsteil umfasst, das mit dem beweglichen Handhabungsteil (21) in der Entnahmeposition eine Kammer zum Einschließen mindestens eines Teils der Kapsel (2) begrenzt.

11. Maschine nach Anspruch 9 oder 10, wobei die Kapselhandhabungsvorrichtung (20) neben dem beweglichen Handhabungsteil (21), und wenn neben dem zusammenwirkenden Handhabungsteil vorhanden, ein Kapselführungsteil (22) zum Führen der Kapsel (2) bei Einführung neben dem beweglichen Handhabungsteil (21) in der Einführposition und/oder Entfernung neben dem beweglichen Handhabungsteil (21) in der Entfernungsposition umfasst.

12. Maschine nach einem der Ansprüche 9 bis 11, wobei das bewegliche Handhabungsteil (21) konfiguriert ist, direkt oder indirekt auf das bewegliche Element (31a; 31b) des Sperrmittels (30) zu wirken, um das Element (31a; 31b) zwischen der offenen und der geschlossenen Position des beweglichen Elements (31a; 31b) zu bewegen.

13. Verfahren zum Einsetzen einer Kapsel (2) in eine Kapselhandhabungsvorrichtung (20) einer Maschine (1) nach einem der vorstehenden Ansprüche, umfassend:
- Bereitstellen einer Kapsel (2) und
- Führen der Kapsel (2) durch die Öffnung (12) des Rahmens oder Gehäuses (10) zu der Handhabungsvorrichtung (20),
wodurch das erste und das zweite bewegliche Element (31a; 31b) des Sperrmittels (30) aus ihrer geschlossenen Position in ihre offene Position bewegt werden, um den Durchgang der Kapsel (2) durch die Öffnung (12) zu ermöglichen, und aus ihrer offenen Position in ihre geschlossene Position bewegt werden, um den Durchgang der Kapsel (2) durch die Öffnung zu verhindern, wobei die Elemente (31a; 31b) zwischen ihrer geschlossenen Position und ihrer offenen Position entlang der Krümmung (31') bewegt werden, die im Allgemeinen parallel zu dem gekrümmten Querschnitt (10') des Rahmens oder Gehäuses (10) liegt, wobei das erste und das zweite Element (31a; 31b) in entgegengesetzten Richtungen zwischen der geschlossenen und der offenen Position bewegt werden.

14. Kombination einer Maschine (1) nach einem der Ansprüche 1 bis 12 und einer Kapsel (2), wobei die Kapsel (2) mindestens teilweise mit einem Getränkeinhaltsstoff gefüllt ist.

15. Verwendung einer Kapsel (2) zum:
- Eingesetztwerden in eine Maschine nach einem der Ansprüche 1 bis 12;
- Eingesetztwerden in eine Maschine gemäß einem Verfahren nach Anspruch 13 oder
- Bereitstellen einer Kombination nach Anspruch 14.

## Revendications

1. Machine (1), telle qu'une machine de préparation d'une boisson, comprenant :
- un dispositif (20) de manipulation d'une capsule (2), telle qu'une capsule (2) contenant un ingrédient de boisson, par exemple choisi parmi du thé, du café, du cacao, du lait et de la soupe, ladite capsule (2) comprenant par exemple un corps de récipient (2'), le corps de récipient (2') de la capsule étant par exemple généralement en forme de godet, par ex. de forme cylindrique, conique ou tronconique ;
- un cadre ou un boîtier (10) recouvrant le dispositif (20), le cadre ou boîtier (10) délimitant une ouverture (12) pour faire passer une capsule (2) à travers le cadre ou boîtier (10) vers le dispositif de manipulation (20), le cadre ou boîtier ayant une section transversale incurvée (10') autour de l'ouverture ; et
- un moyen formant barrière (30), par exemple une porte, comprenant un élément (31a ; 31b) mobile d'une position fermée pour empêcher une telle capsule (2) de passer à travers l'ouverture (12) vers une position ouverte pour laisser passer une telle capsule (2) à travers l'ouverture (12),
**caractérisée en ce que** le moyen formant barrière (30) comprend ledit élément mobile (31a ; 31b) en tant que premier élément mobile (31a) du moyen formant barrière (30) et un deuxième élément mobile (31b) du moyen formant barrière (30), le premier élément (31a) et le deuxième élément (31b) étant mobiles entre une position fermée pour empêcher une telle capsule (2) de passer à travers l'ouverture (12) vers une position ouverte permettant à une telle capsule (2) de passer à travers l'ouverture (12), le premier élément (31a) et le deuxième élément (31b) étant mobiles entre leur position fermée et leur position ouverte le long d'une courbe (31') qui est généralement parallèle à la section transversale incurvée (10') du cadre ou boîtier (10), les premier et deuxième éléments (31a ; 31b) du moyen formant barrière (30) étant mobiles dans des directions opposées entre les positions fermée et ouverte.

2. Machine selon la revendication 1, dans laquelle le cadre ou boîtier (10) est agencé pour s'étendre entre l'élément mobile du moyen formant barrière et le dispositif de manipulation de capsule ou agencé de sorte que l'élément (31 ; 31b) du moyen formant barrière s'étende entre le dispositif de manipulation de capsule (20) et le cadre ou boîtier (10).

3. Machine selon la revendication 1 ou 2, dans laquelle le premier élément mobile (31a) et le deuxième élément mobile (31b) sont mobiles entre leur position fermée et leur position ouverte le long de la courbe (31') qui est parallèle à la section transversale (10') qui s'étend le long d'une arche généralement circulaire ou elliptique.

4. Machine selon une quelconque revendication précédente, dans laquelle l'élément formant barrière (31a ; 31b) délimite un siège (32) pour recevoir et positionner ladite capsule (2) au niveau de l'ouverture (12) lorsque l'élément est dans sa position fermée, le siège (32) ayant éventuellement une forme qui correspond généralement à une partie externe de ladite capsule (2).

5. Machine selon la revendication 4, dans laquelle le siège (32) a un fond évidé (32') pour recevoir un corps de récipient (2') de ladite capsule (2) et/ou une rainure (32") pour recevoir une bride (2") de ladite capsule (2).

6. Machine selon une quelconque revendication précédente, dans laquelle l'élément formant barrière (31a ; 31b) dans sa position fermée empêche les projections de fluide du dispositif de manipulation de capsule (20) à travers l'ouverture (12).

7. Machine selon une quelconque revendication précédente, dans laquelle l'élément formant barrière (31a ; 31b) est mobile entre les positions ouverte et fermée par un actionneur (35a ; 35b) qui actionne par l'intermédiaire d'une transmission (33a, 34a) l'élément formant barrière (31a ; 31b).

8. Machine selon une quelconque revendication précédente, qui comprend un support (11) sur lequel le moyen formant barrière (30) est monté de façon mobile, le support (11) étant éventuellement fixé sur ou solidaire du cadre ou boîtier (10) comme s'étendant, par exemple vers le bas, du cadre ou boîtier (10) comme une partie de cadre ou boîtier.

9. Machine selon une quelconque revendication précédente, dans laquelle le dispositif de manipulation de capsule (20) comprend une partie de manipulation de capsule (21) qui est mobile entre une position pour insérer et/ou retirer une capsule et une position pour extraire la capsule.

10. Machine selon la revendication 9, dans laquelle, en plus de ladite partie de manipulation de capsule mobile (21), le dispositif de manipulation de capsule comprend une partie de manipulation coopérante qui délimite, avec la partie de manipulation mobile (21) dans la position d'extraction, une chambre pour enfermer au moins une partie de ladite capsule (2).

11. Machine selon la revendication 9 ou 10, dans laquelle le dispositif de manipulation de capsule (20) comprend en plus de la partie de manipulation mobile (21), et lorsqu'elle est présente en plus de ladite partie de manipulation coopérante, une partie de guidage de capsule (22) pour guider ladite capsule (2) à l'insertion à côté de la partie de manipulation mobile (21) dans la position d'insertion et/ou au retrait depuis à côté de la partie de manipulation mobile (21) dans la position de retrait.

12. Machine selon l'une quelconque des revendications 9 à 11, dans laquelle la partie de manipulation mobile (21) est conçue pour agir directement ou indirectement sur l'élément mobile (31a ; 31b) du moyen formant barrière (30) pour déplacer l'élément (31a ; 31b) entre les positions ouverte et fermée de l'élément mobile (31a ; 31b).

13. Procédé d'insertion d'une capsule (2) dans un dispositif de manipulation de capsule (20) d'une machine (1) telle que définie dans une quelconque revendication précédente, comprenant :
- la fourniture d'une capsule (2) ; et
- le passage de la capsule (2) à travers l'ouverture (12) du cadre ou boîtier (10) vers le dispositif de manipulation (20),
moyennant quoi les premier et second éléments mobiles (31a ; 31b) du moyen formant barrière (30) sont déplacés de leur position fermée à leur position ouverte pour permettre à la capsule (2) de passer à travers l'ouverture (12) et de leur position ouverte vers leur position fermée pour empêcher la capsule (2) de passer à travers l'ouverture, les éléments (31a ; 31b) étant déplacés entre leur position fermée et leur position ouverte le long de ladite courbe (31') généralement parallèle à la section transversale incurvée (10') du cadre ou boîtier (10), les premier et deuxième éléments (31a ; 31b) étant déplacés dans des directions opposées entre les positions fermée et ouverte.

14. Combinaison d'une machine (1) telle que définie dans l'une quelconque des revendications 1 à 12 et d'une capsule (2), la capsule (2) étant au moins partiellement remplie d'un ingrédient de boisson.

15. Utilisation d'une capsule (2) pour :
- être insérée dans une machine telle que définie dans l'une quelconque des revendications 1 à 12 ;
- être insérée dans une machine selon un procédé tel que défini dans la revendication 13 ; ou
- produire une combinaison telle que définie dans la revendication 14.
